# EUROPEAN PATENT APPLICATION

(11) **EP 3 410 521 A1**
(43) Date of publication of application: **05.12.2018**
(21) Application number: 17743925.4
(22) Date of filing: 11.01.2017
(51) Int. Cl.: H01M 4/96, C09D 5/24, C09D 7/12, C09D 201/00, H01M 4/86, H01M 4/88, H01M 8/10

(54) **GAS DIFFUSION ELECTRODE, MICROPOROUS LAYER COATING MATERIAL AND PRODUCTION METHOD THEREOF**

(30) Priority: 27.01.2016 JP 2016013133; 27.01.2016 JP 2016013134; 06.06.2016 JP 2016112415
(71) Applicant: Toray Industries, Inc., Tokyo 103-8666 (JP)
(72) Inventor: KATO, Sho, Otsu-shi Shiga 520-2141 (JP); HASHIMOTO, Masaru, Otsu-shi Shiga 5208558 (JP); WAKATABE, Michio, Otsu-shi Shiga 520-2141 (JP)
(74) Representative: Prüfer & Partner mbB Patentanwälte · Rechtsanwälte
(86) International application number: PCT/JP2017/000617
(87) International publication number: WO 2017/130694

(57) **Abstract**

A gas diffusion electrode comprising microporous layers on at least one side of an electrically conductive porous substrate, wherein said gas diffusion electrode has a thickness of 30 µm to 180 µm, said microporous layer has thickness of 10 µm to 100 µm, and when said surface of the microporous layer is observed for the area 0.25 mm² for 4000 viewing areas, the number of the viewing areas having a maximal height Rz of not less than 50 µm is, among the 4000 viewing areas, 0 viewing areas to 5 viewing areas. A gas diffusion electrode which satisfies both the prevention of the damage to an electrolyte membrane by a gas diffusing layer and the gas diffusivity of the gas diffusing layer, and exhibits good performance as a fuel cell.

## Description

### TECHNICAL FIELD

A fuel cell is a mechanism by which energy generated by reaction between hydrogen and oxygen to produce water is electrically extracted. Since fuel cells have high energy efficiency and emit only water, they are expected to become more popular as clean energy. The present invention relates to a gas diffusion electrode for use in a fuel cell. Among fuel cells, the invention particularly relates to a gas diffusion electrode for use in a polymer electrolyte fuel cell, which is used as a power supply for fuel cell vehicles, etc., as well as a microporous layer paint used therefor.

### BACKGROUND ART

An electrode for use in a polymer electrolyte fuel cell is sandwiched between two separators in a polymer electrolyte fuel cell. Such an electrode is configured to be placed on each side of a polymer electrolyte membrane and to have a catalyst layer formed on the surface of the polymer electrolyte membrane and a gas diffusion layer formed on the outer side of the catalyst layer. As separate members for forming gas diffusion layers of electrodes, gas diffusion electrodes have been distributed. Such gas diffusion electrodes require properties such as gas diffusivity, electrical conductivity for collecting the electricity generated in the catalyst layer, and water drainage for efficiently removing moisture generated on the catalyst layer surface. In order to obtain such a gas diffusion electrode, generally, an electrically conductive porous substrate having both gas diffusivity and electrical conductivity is used.

As an electrically conductive porous substrate, specifically, a carbon felt, a carbon paper, a carbon cloth, or the like made of carbon fiber is used. In particular, in terms of mechanical strength and the like, carbon papers are believed to be the most preferable.

When such an electrically conductive porous substrate is directly used as a gas diffusion electrode, the coarse surface of the electrically conductive porous substrate can damage the electrolyte membrane, resulting in the lower durability of the fuel cell. In order to avoid the decrease of the durability, a layer called microporous layer (microporous layer) is placed on the electrically conductive porous substrate in some cases. Since the microporous layer will be a part of the gas diffusion electrode, the gas diffusivity and the electrical conductivity are necessary. Thus, it is required that the microporous layer contains an electrically conductive microparticle and has a pore.

The microporous layer is obtained by coating an electrically conductive porous substrate with a microporous layer paint in which electrically conductive microparticles are diffused, and drying and sintering the substrate. The presence of a huge foreign substance in the microporous layer paint can be responsible for a paint defect. When a convexity caused by the foreign substance is present on the coated membrane surface formed by the microporous layer paint, the convexity causes a damage to the electrolyte membrane. In some cases, generated water accumulates in a space at the interface between the catalyst layer and the microporous layer resulting from the convexity, which prevents the diffusion of gas (this phenomenon is called flatting hereinafter). Thus, the reduction of foreign substances in the microporous layer paint is required. In order to reduce dust and the like as much as possible, the cleaning of the production process has been performed. However, the cleaning alone is not sufficient for reducing foreign substances in the microporous layer paint. One reason includes an aggregate of electrically conductive microparticles contained in the microporous layer paint.

Conventionally, the reduction of aggregates has been attempted by applying a strong shear to the microporous layer paint for a long time and thus improving the diffusivity (Patent Literature 1, 2). However, when the diffusivity of the microporous layer paint is improved in order to reduce the aggregates in the microporous layer paint, the viscosity of the microporous layer paint decreases. Thus, a problem arises that the microporous layer paint infiltrates the electrically conductive porous substrate when coated thereon. The infiltration of the microporous layer into the electrically conductive porous substrate cannot lower the surface roughness of the electrically conductive porous electrode substrate. Therefore, the prevention of the infiltration of the microporous layer into the electrically conductive porous substrate has been demanded. Thus, the control of the fluidity by adding a thickener to the microporous layer paint or the like has been attempted (Patent Literature 3).

### PRIOR ART DOCUMENTS

### [Patent Documents]

[Patent Document 1] JP 2003-100305 A
[Patent Document 2] JP 11-273688 A
[Patent Document 3] JP 2015-138656 A

### SUMMARY OF THE INVENTION

### PROBLEMS TO BE SOLVED BY THE INVENTION

After the research by the present inventors, it was discovered that the improvement of the diffusivity of the microporous layer paint for the reduction of aggregates in the microporous layer cannot prevent the infiltration into the electrically conductive porous substrate. Therefore, it is difficult for the gas diffusion electrode produced by the technology disclosed in Patent Literatures 1 to 3 to satisfy both the prevention of the damage to the electrolyte membrane and the gas diffusivity.

The present invention has an object to provide a gas diffusion electrode which overcomes such a drawback of the conventional technology, satisfies both the prevention of the damage to the electrolyte membrane and the gas diffusivity, and exhibits good performance as a fuel cell.

### MEANS FOR SOLVING THE PROBLEMS

In order to solve the above problems, the present invention employs the following means.

The gas diffusion electrode comprising a microporous layer on at least one side of an electrically conductive porous substrate, wherein the gas diffusion electrode has a thickness of 30 µm to 180 µm,
the microporous layer has a thickness of 10 µm to 100 µm, and when the surface of the microporous layer is observed for the area 0.25 mm² for 4000 viewing areas, the number of the viewing areas having a maximal height Rz of not less than 50 µm is, among the 4000 viewing areas, 0 viewing areas to 5 viewing areas.

The present invention is also related to a microporous layer paint comprising an electrically conductive microparticle and a solvent, wherein when the microporous layer paint is coated on a glass substrate to form a coated membrane, and the surface of the coated membrane is observed in the area of 0.25 mm² for 2000 viewing areas, the number of the viewing areas having a maximal peak height Rp of not less than 10 µm is, among the 2000 viewing areas, 0 viewing areas to 25 viewing areas, and the gloss level is 1% to 30%.

Furthermore, the present invention includes a method of producing a microporous layer paint, comprising a wetting and diffusing step of wetting and diffusing electrically conductive microparticles with a solvent, and a crushing step of crushing aggregates in the paint resulting from the wetting and diffusing step.

### EFFECT OF THE INVENTION

The use of the gas diffusion electrode of the present invention can provide a fuel cell with a good durability and a good fuel cell performance because both the prevention of the electrolyte membrane damage and the gas diffusivity can be achieved.

### BRIEF DESCRIPTION OF THE DRAWINGS

Fig. 1 illustrates a crack on the surface of a microporous layer.
Fig. 2 illustrates a conceptual diagram of one aspect of an apparatus used in a crushing step.
Fig. 3 illustrates a conceptual diagram of another aspect of the apparatus used in the crushing step.
Fig. 4 illustrates a schematic view of an apparatus for measuring the planar gas diffusivity.

### MODE FOR CARRYING OUT THE INVENTION

In a solid polymer fuel cell, a gas diffusion electrode is required to have high gas diffusivity for diffusing a gas supplied from a separator into a catalyst, high water drainage for discharging water produced by electrochemical reaction into the separator, and high electrical conductivity for extracting the generated current.

The gas diffusion electrode of the present invention comprises microporous layers on at least one side of an electrically conductive porous substrate. The gas diffusion electrode can have a microporous layer either on one side or both sides, but in a preferred aspect, the gas diffusion electrode has a microporous layer only on one side.

In an electrically conductive porous substrate, electrical conductivity, gas diffusivity, water drainage and the like are required. Specifically, as the electrically conductive porous substrate, for example, it is preferable to use a carbon fiber-containing porous substrate such as a carbon fiber fabric, carbon fiber paper-like body, carbon fiber non-woven fabric, carbon felt, carbon paper, or carbon cloth; or a metal porous substrate such as a foamed sintered metal, metal mesh, or an expanded metal. Among them, in terms of excellent corrosion resistance, it is preferable to use a carbon fiber-containing electrically conductive porous substrate such as a carbon felt, carbon paper, or carbon cloth. Further, in terms of excellent "springiness", that is, the property of absorbing dimensional changes in the thickness direction of an electrolyte membrane, it is preferable to use a substrate made of carbon fiber paper-like bodies bound together with a carbide, that is, a carbon paper. The electrically conductive porous substrate preferably has a thickness of 20 µm to 170 µm, more preferably 50 µm to 170 µm.

The microporous layers are described below. The microporous layer is a layer obtained by coating an electrically conductive porous substrate with a microporous layer paint in which electrically conductive microparticles are diffused with a solvent, and drying and sintering the substrate. Since the microporous layer will be a part of the gas diffusion electrode, the electrical conductivity, gas diffusivity, water drainage and the like are required in the microporous layer as in an electrically conductive porous substrate. The average pore size of the microporous layer is preferably 0.01 µm to 5 µm.

In order to provide the electrical conductivity, the microporous layer contains an electrically conductive microparticle. Examples of the electrically conductive microparticle used in the microporous layer are metallic microparticles or metal oxide microparticles such as gold, silver, copper, platinum, titanium, titanium oxide, and zinc oxide; microparticles from carbon materials such as carbon black, graphene, and graphite; and linear carbons such as vapor-grown carbon fibers (VGCF) which are "electrically conductive materials having a linear portion," carbon nanotubes, carbon nanohorns, carbon nanocoils, cup-stacked carbon nanotubes, bamboo-like carbon nanotubes, graphite nanofibers, and chopped carbon fibers. The average of the largest pores of the electrically conductive microparticles is preferably 0.01 µm to 1000 µm.

For the efficient drainage of water produced during the electricity generation, the microporous layer preferably contains a water-repellent resin in order to gain water repellency. Examples of such a water-repellent resin include fluorine resins such as polytetrafluoroethylene (PTFE), tetrafluoroethylene-hexafluoro propylene copolymer (FEP), perfluoroalkoxy fluoride resin (PFA), polychlorotrifluoroethylene (PCTFE), ethylene-tetrafluoroethylene copolymer (ETFE), ethylene chlorotrifluoroethylene copolymer (ECTFE), and polyvinylidene fluoride (PVdF). PTFE and FEP are preferred as the water-repellent resin in terms of their high water repellency.

In order to diffuse the electrically conductive microparticles in a solvent, the microporous layer paint preferably contains a surfactant. The microporous layer paint means a paint for forming a microporous layer, which contains as an essential component an electrically conductive microparticle and a solvent. Examples of the surfactant used for this purpose include polyethylene glycol mono-p-isooctyl phenyl ether, polyoxyethylene lauryl ether, and the like.

In order to avoid the damage of the electrolyte membrane caused by the coarse surface of the electrically conductive porous substrate, it is preferred that a microporous layer having a thickness of not less than 10 µm is formed on the surface of the electrically conductive porous substrate. Therefore, the microporous layer paint has preferably a viscosity of not less than 2 Pa·s, and more preferably not less than 5 Pa·s. When the viscosity of the microporous-layer coating liquid is smaller than this value, the coating liquid can run on the surface of the electrically conductive porous substrate, or the coating liquid can flow into the pores of the electrically conductive porous substrate, causing a strike-through. On the contrary, when the viscosity is too high, coating performance deteriorates. Therefore, the microporous layer paint has preferably a viscosity of not more than 15 Pa·s.

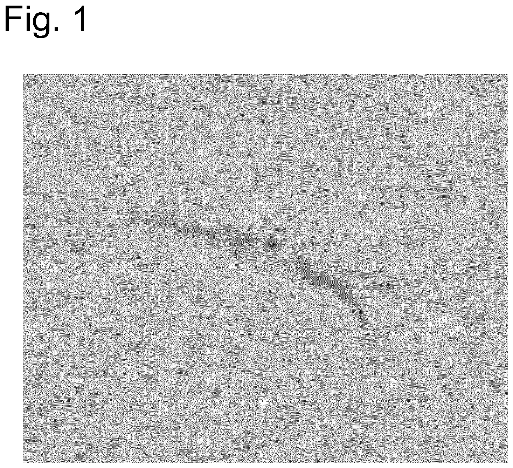

After the research by the present inventors, it was discovered that, when a microporous layer paint with its diffusivity improved to decrease aggregates was coated on an electrically conductive porous substrate, as shown in Fig. 1, a huge crack 1 occurred. Electrically conductive microparticles have a characteristic that they do not exist as primary particles. The primary particles aggregate into a primary aggregate, the primary aggregates further aggregate into a secondary aggregate, and the secondary aggregates further aggregate into a tertiary aggregate. Thus, the electrically conductive microparticles are present as aggregates of different sizes, which gives a distribution having a peak for a certain size. When such electrically conductive microparticles are diffused in a solvent, the improvement of the diffusivity indicates a shift of the distribution of aggregates to smaller values. Smaller aggregates of electrically conductive microparticles due to the improved diffusivity have a smaller interactive force. Thus, the interaction of the aggregates is canceled out by stress due to thermal expansion upon the drying and sintering, resulting in a crack on the microporous layer. The occurrence of a crack on the microporous layer can be used as an index of the diffusivity of the microporous layer paint. The microporous layer paint used in the present invention preferably has the diffusivity not too high. Therefore, in the gas diffusion electrode of the present invention, the surface of the microporous layer has the crack occupancy of 0% to 0.072%. The surface of the microporous layer has preferably the crack occupancy of 0% to 0.035%, more preferably 0% to 0.0072%, and particularly preferably 0% to 0.00072%.

The research by the present inventors also revealed a correlation between the diffusivity and the gloss level of the microporous layer paint; as the diffusivity improved, the gloss level increased. The gloss level used herein indicates a value obtained by measuring with a glossmeter the surface of the microporous layer formed by coating the microporous layer paint on a glass substrate. Details of the measurement method will be explained later. As described above, when electrically conductive microparticles are diffused in a solvent, the improvement of the diffusivity indicates a shift of the distribution itself of aggregates to small values. It is believed that this peak shift in the sizes of the aggregates reflects the variation in the gloss level. Since the gloss level indicates a reflection ratio of a light irradiated at a certain angle, the surface roughness of the coated membrane formed from the microporous layer paint is an important factor. It is believed that the surface roughness of the coated membrane formed from the microporous layer paint depends on the peak position in the aggregate size distribution. When the peak in the aggregate size distribution is located at a region where the aggregates are considered to be large, the surface of the coated membrane formed from the microporous layer paint is coarse, thereby a lower gloss level. On the other hand, when the peak is located at a region where the aggregates are considered to be small, the surface of the microporous layer formed using the microporous layer paint is smooth, thereby a higher gloss level. In other words, the gloss level can be used as an index of the diffusivity of the microporous layer paint.

After the research by the present inventors, it was also discovered that the excessive improvement of the diffusivity of the microporous layer paint would produce the infiltration of the microporous layer paint into the electrically conductive porous substrate. As the cause, it is believed that the improvement of the diffusivity results in the reduction in the size of the electrically conductive microparticle aggregates, causing the aggregates to fall into the pores of the electrically conductive porous substrate.

Therefore, in order to prevent the infiltration of the microporous layer into the electrically conductive porous substrate, which is responsible for the decrease of the gas diffusivity, the microporous layer paint of the present invention has a gloss level of not more than 30%, and preferably not more than 20% with the gloss level representing the index of the diffusivity of the microporous layer paint. When the gloss level is too low, the surface smoothness is lost. Therefore, the microporous layer paint of the present invention has a gloss level of not less than 1%.

When the aggregates of electrically conductive microparticles present in the microporous layer paint are too large, the electrolyte membrane is damaged, or a flatting occurs. Therefore, in the microporous layer paint of the present invention, when the surface of the microporous layer formed by coating the paint on a glass substrate is observed in the area of 0.25 mm² for 2000 viewing areas, the number of the viewing areas having a maximal peak height Rp of not less than 10 µm is, among the 2000 viewing areas, 0 viewing areas to 25 viewing areas, preferably 0 viewing areas to 5 viewing areas, and more preferably 0 viewing areas. Details of the measurement method for Rp will be explained later.

When the surface of the microporous layer formed on at least one side of the electrically conductive porous substrate has the maximal height Rz of not less than 50 µm due to the aggregates of the electrically conductive microparticles, the damage of the electrolyte membrane or a flatting is caused. Therefore, in the gas diffusion electrode of the present invention, when the surface of the microporous layer is observed in the area 0.25 mm² for 4000 viewing areas, the number of the viewing areas with a maximal height Rz of not less than 50 µm is, among the 4000 viewing areas, 0 viewing areas to 5 viewing areas, and preferably 0 viewing areas. Details of the measurement method for Rz will be explained later.

When the microporous layer paint is coated on the electrically conductive porous substrate, the paint preferably does not exhibit thixotropy or inverse thixotropy for easier handling. The thixotropy herein means a property that the apparent viscosity decreases temporarily when the paint undergoes shear, and stays decreased for a certain period of time even after the shear is removed. In rheology measurements, a hysteresis curve is formed. The inverse thixotropy herein means a property that the apparent viscosity increases temporarily when the paint undergoes shear, and stays increased for a certain period of time even after the shear is removed. In rheology measurements, a hysteresis curve is formed.

The production step of the above microporous layer paint preferably contains a step of wetting (mixing with the solvent) and diffusing the electrically conductive microparticles (hereinafter, called wetting and diffusing step) as well as a step of crushing the aggregates present in the paint resulting from the wetting and diffusing step (hereinafter, called crushing step).

Examples of the apparatus used in the wetting and diffusing step include a mixing and agitation apparatus, a planetary mixer, a kneading extruder, a powder-suctioning continuous dissolution and diffusion apparatus, a homogenizer, a vertical solid liquid mixer, and a horizontal solid liquid mixer. Any apparatus can be used as long as electrically conductive microparticles and the solvent can be wetted and diffused.

In the crushing step, in order to apply shear to the paint more efficiently, the viscosity of the paint after the wetting and diffusing step and before the crushing step is preferably not less than 5 Pa·s and more preferably not less than 10 Pa·s to. On the other hand, too high a viscosity causes too much shear to the paint during the crushing step, and the diffusion progresses excessively. Therefore, the viscosity of the paint after the wetting and diffusing step and before the crushing step is preferably not more than 300 Pa·s, more preferably not more than 100 Pa·s, and further preferably not more than 40 Pa·s.

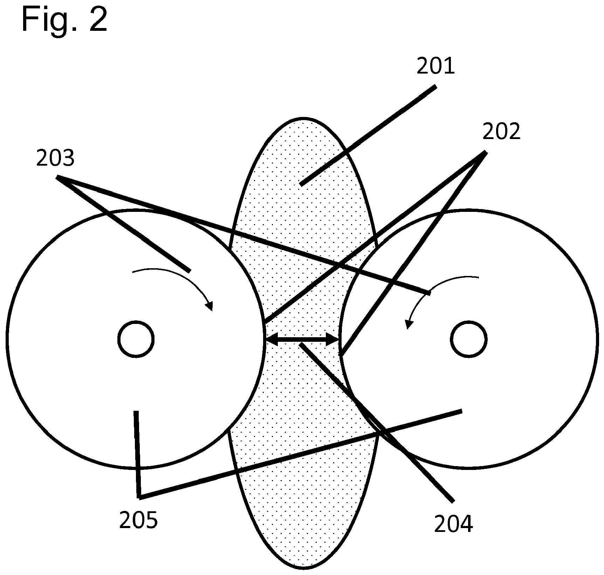

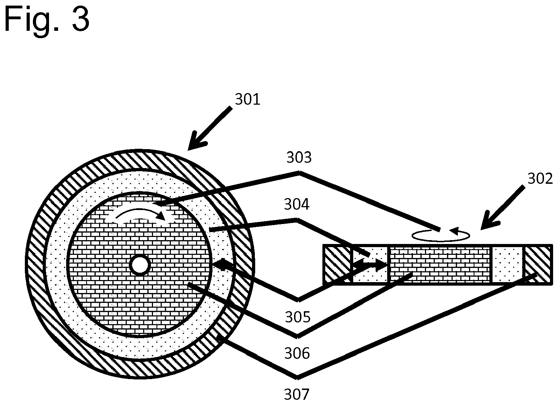

The apparatus used in the crushing step is preferably an apparatus shown in, for example, Fig. 2 and Fig. 3. In Fig. 2, 2 rolls (205) rotate in a direction opposite to each other (203), which causes the paint (201) to penetrate the smallest gap of the rolls (204). Thus, shear is applied and crushes the aggregates present in the paint (201). The portion where the shear is applied is called shear portion (202). The apparatus having the structure in Fig. 2 is called three-roll mill. In Fig. 3, the rotation of the rotor (306) applies shear on the paint (304) between the rotor and the stator (307), thereby crushing aggregates present in the paint (304). The portion where the shear is applied is called shear portion (305). The apparatus having the structure in Fig. 3 is called media-less mill. In order to crush the aggregates present in the paint, the smallest gap at the shear portion (202, 305) is preferably not more than 500 µm, more preferably not more than 300 µm, and further preferably not more than 100 µm. When the smallest gap is too small, the diffusion of the paint progresses excessively. Therefore, the smallest gap at the shear portion is preferably not less than 10 µm, and more preferably not less than 20 µm.

In order to prevent the excessive progress of the paint diffusion, the residence time of the paint in the smallest gap portion of the shear portion in the apparatus used for crushing is preferably more than 0 seconds and not more than 5 seconds, and more preferably more than 0 seconds and not more than 1 second. Even when the paint passes the apparatus used for crushing several times and as a result, passes the smallest gap portion of the shear portion in the apparatus used for crushing several times, "the residence time of the paint in the smallest gap portion of the shear portion in the apparatus used for crushing" means the residence time for one passage, and does not mean the total of the several passages.

In order to prevent the excessive progress of the paint diffusion, a single passage of the apparatus used for crushing is preferred. "A single passage of the apparatus used for crushing" herein means that the apparatus has a structure in which the paint passes the smallest gap portion of the shear portion only once when the paint passes the apparatus used for crushing once. The microporous layer paint can pass the apparatus used for crushing several times for optimal painting characteristics (Fig. 2, Fig. 3).

The shear rate at the shear portion in the apparatus used for crushing is preferably 1000 s⁻¹ to 1000000 s⁻¹. The shear rate herein indicates a value obtained by multiplying the smallest gap distance (m) of the shear portion in the apparatus used for crushing by the peripheral speed (m/s) of the rolls or the rotor at the shear portion.

Examples of the apparatus used in the crushing step include the apparatus having the above characteristics. Specific examples include a three-roll mill and media-less mill.

The application of the microporous-layer coating liquid to the electrically conductive porous substrate can be carried out using various kinds of commercially available coating devices. Specific examples include screen printing, rotary screen printing, spraying, intaglio printing, gravure printing, die coating, bar coating, blade coating, and comma coating. Die coating is preferred since the coating amount can be made constant independent of the surface roughness of the electrically conductive porous substrate. In a case where a gas diffusion electrode is incorporated in a fuel cell, and smoothness of the coating surface is required for increasing its adhesion to a catalyst layer, coating by such as a blade coater or a comma coater is preferred. The above examples of the coating methods are merely for the illustration purpose, and the method is not limited thereto.

The microporous layer can be either single layer or a multi-layer, but particularly preferably is composed of a first microporous layer in contact with the electrically conductive porous substrate and a second microporous layer which is in contact with the first microporous layer and located on the outermost surface of the gas diffusion electrode. When such a gas diffusion electrode having the first microporous layer and the second microporous layer is produced, it is preferred to apply the first microporous-layer coating liquid on one surface of the electrically conductive porous substrate, followed by applying the second microporous-layer coating liquid thereon.

The multi-layer application can be carried out by, for example, a method in which the first microporous-layer coating liquid is applied using a die coater, and the second microporous-layer coating liquid is also applied using a die coater; a method in which the first microporous-layer coating liquid is applied using various roll coaters, and the second microporous-layer coating liquid is applied using a die coater; a method in which the first microporous-layer coating liquid is applied using a comma coater, and the second microporous-layer coating liquid is applied using a die coater; a method in which the first microporous-layer coating liquid is applied using a lip coater, and the second microporous-layer coating liquid is applied using a die coater; or a method in which the first microporous-layer coating liquid and the second microporous-layer coating liquid are laminated and thus coated simultaneously using a slide die coater before their application to the substrate. In particular, for uniform application of a high-viscosity coating liquid, the first microporous-layer coating liquid is preferably applied using a die coater or a comma coater.

After the application of the microporous-layer coating liquid, the dispersion medium (water, in cases of an aqueous system) in the microporous-layer coating liquid is removed by drying, if necessary. In cases where the dispersion medium is water, the temperature during the drying is preferably from room temperature (about 20°C) to 150°C, and more preferably from 60°C to 120°C. The drying of the dispersion medium may be carried out at once in the later sintering step.

In general, after the application of the microporous-layer coating liquid, sintering is carried out for the purpose of removing the surfactant used for the microporous-layer coating liquid, and for the purpose of once dissolving the water-repellent resin to bind the electrically conductive microparticles.

The sintering is preferably carried out at a temperature of 250°C to 400°C, although the temperature depends on the boiling point or the decomposition temperature of the surfactant added. In cases where the sintering temperature is less than 250°C, achievement of the removal of the surfactant may be insufficient, or a vast period of time may be required for complete removal of the surfactant. In cases where the sintering temperature exceeds 400°C, degradation of the water-repellent resin may occur.

From the viewpoint of productivity, the sintering time is as short as possible, preferably not more than 20 minutes, more preferably not more than 10 minutes, and still more preferably not more than 5 minutes. However, sintering in a very short period may cause a problem such as the insufficient removal of the surfactant or the insufficient dissolution of the water-repellent resin. Therefore, the sintering time is preferably not less than 10 seconds.

An optimal temperature and length of time for the sintering are selected taking into account the melting point or the decomposition temperature of the water-repellent resin, and the decomposition temperature of the surfactant.

The gas diffusion electrode needs to have superior gas diffusivity. Therefore, the through-thickness gas diffusivity is preferably not less than 30%, more preferably 30% to 50%, and further preferably 30% to 40%. Details of the measurement method of the through-thickness gas diffusivity will be explained later.

In order to achieve this through-thickness gas diffusivity, the gas diffusion electrode has a thickness of not more than 180 µm, preferably not more than 150 µm, and further preferably not more than 130 µm. When the gas diffusion electrode is too thin, the strength is reduced. Therefore, the gas diffusion electrode has a thickness of not less than 30 µm, and preferably not less than 40 µm.

As described above, the thickness of the microporous layer is not less than 10 µm, and preferably not less than 20 µm. However, when the gas diffusion electrode is too thick, the through-thickness gas diffusivity is reduced. Therefore, the microporous layer has a thickness of not more than 100 µm, and preferably not more than 50 µm.

Even when the thickness of the microporous layer is assured, if the microporous layer infiltrates the electrically conductive porous substrate, the planar gas diffusivity can be inhibited. The planar gas diffusivity of the gas diffusion electrode is preferably not less than 0.7 e^{0.025x} cc/min, more preferably 0.7 e^{0.025x} cc/min to 200 cc/min, and particularly preferably 0.7 e^{0.025x} cc/min to 150 cc/min with x (µm) being the gas diffusion electrode thickness and the e being Napier's constant. When the planar gas diffusivity is smaller than this range, the gas utilization efficiency in the fuel cell is reduced, resulting in a possible decrease of the power generation performance in the fuel cell. The measurement method of the planar gas diffusivity will be explained later. In order to have the through-thickness gas diffusivity of not less than 0.7 e^{0.025x} cc/min, the infiltration of the microporous layer into the electrically conductive porous substrate needs to be prevented. It is effective to form a microporous layer by coating the microporous layer paint produced in the above method.

In order to reduce the aggregates on the surface of the microporous layer, prevent the occurrence of cracks on the surface of the microporous layer, and to secure the planar gas diffusivity, the microporous layer has preferably a first microporous layer in contact with the electrically conductive porous substrate and a second microporous layer which is in contact with the first microporous layer and located on the outermost surface of the gas diffusion electrode. The first microporous layer produced by the above method can reduce the aggregates in the first microporous layer, prevent the occurrence of cracks, and prevent the infiltration into the electrically conductive porous substrate. Even if the second microporous layer is produced with high diffusion by the conventional method, a crack does not occur as long as the surface of the first microporous layer is smooth and thin. In addition, thanks to the filling effect of the first microporous layer, the second microporous layer does not infiltrate the electrically conductive porous substrate. Thus, the reduction of the aggregates on the surface of the microporous layer, prevention of the crack occurrence and the assurance of the planar gas diffusivity can be satisfied.

In the case of a microporous layer with a multi-layer structure, the total thickness of the microporous layer is preferably not less than 10 µm for producing the effect of preventing mechanical damage of an electrolyte membrane due to transfer of coarseness of the electrically conductive porous substrate to the electrolyte membrane. More preferably, the thickness of the first microporous layer alone is not less than 9.9 µm, still more preferably not less than 10 µm, and further preferably not less than 19.9 µm. However, the thickness of the first microporous layer is preferably less than 100 µm since the gas diffusivity needs to be secured even in the presence of the second microporous layer laminated thereon.

The second microporous layer preferably has a thickness of not less than 0.1 µm and less than 10 µm. In cases where the thickness of the second microporous layer is less than 0.1 µm, the surface of the first microporous layer cannot be completely covered with the second microporous layer, and therefore the aggregates or the cracks present in the first microporous layer can be revealed on the surface of the microporous layer. The thickness of the second microporous layer of not less than 10 µm can cause a crack to occur on the surface of the microporous layer. The thickness of the second microporous layer is preferably not more than 7 µm, and more preferably not more than 5 µm.

### EXAMPLES

The present invention is described below more concretely by way of Examples. The materials used in Examples, the method of producing the gas diffusion electrode, the method of producing the microporous layer paint, the method of evaluating the gas diffusion electrode, and the method of evaluating the microporous layer paint are explained below.

### <Materials>

A: Electrically conductive porous substrate
   (1) A carbon paper having a thickness of 100 µm and a porosity of 85% was prepared as described below.

First of all, a carbon fiber paper was produced by the following papermaking step. Polyacrylonitrile-based carbon fiber "TORAYCA" (registered trademark) T300-6K (average single-fiber diameter, 7 µm; number of single fibers, 6,000), manufactured by Toray Industries, Inc., was cut to a length of 6 mm, and subjected to continuous papermaking process together with pulp, using water as a papermaking medium. The resulting sheet was then immersed in a 10% by mass aqueous polyvinyl alcohol solution, and then dried. Thus, a long sheet of carbon fiber paper was continuously produced and wound up into a roll shape. The resulting carbon fiber paper had an areal weight of 15 g/m². Per 100 parts by mass of the carbon fiber paper, the amount of pulp was 40 parts by mass, and the amount of polyvinyl alcohol attached was 20 parts by mass.

Then, the resulting carbon fiber paper was immersed in a phenol resin according to the following resin impregnation step. A dispersion was prepared by mixing a flake graphite (average particle size, 5 µm; aspect ratio, 15), a phenol resin, and methanol at a mass ratio of 2:3:25. The above carbon fiber paper was continuously impregnated with the above dispersion to a phenol resin impregnation amount of 78 parts by mass per 100 parts by mass of the carbon staple, followed by drying at a temperature of 90°C for 3 minutes. After that, the carbon paper was wound up into a roll shape, to obtain a resin-impregnated carbon fiber paper. As the phenol resin, a mixture of a resol-type phenol resin and a novolac-type phenol resin at the mass ratio of 1:1 was used. The carbonization yield of this phenol resin (mixture of the resol-type phenol resin and the novolac-type phenol resin) was 43%.

Hot plates were set parallel to each other in a press machine, and a spacer was arranged on the lower hot plate. The press was opened and closed repeatedly at a hot plate temperature of 170°C and a surface pressure of 0.8 MPa. The resulting resin-impregnated carbon fiber paper, sandwiched between release papers from the upper and lower sides, was intermittently conveyed to the press machine and subjected to compression treatment. Then, the carbon fiber paper was round up in a roll shape.

Using the compression-treated carbon fiber paper as a precursor fiber sheet, a carbon paper was obtained by the following carbonization step. The precursor fiber sheet was introduced into a heating furnace at a maximum temperature of 2400°C in which a nitrogen gas atmosphere was maintained. While being made to travel continuously in the heating furnace, the sheet was sintered at a temperature rise rate of about 500°C/min. (400°C/min. at temperatures of not more than 650°C, and 550°C/min. at temperatures higher than 650°C). After this, the sheet was wound up into a roll shape, to obtain a carbon paper.
The obtained carbon paper had a density of 0.25 g/cm³, a porosity of 85% and an average pore size of 40 µm.
(2) For comparison, a carbon paper having a thickness of 200 µm, a porosity of 85% and an average pore size of 40 µm was obtained in the same manner as in (1) except that the carbon fiber areal weight and the spacer thickness in the compression treatment were adjusted such that the thickness after carbonization was 200 µm.
   B: Electrically conductive microparticle
      Carbon black 1 (hereinafter CB1) (The DBP oil absorption 175 cc/100 g, BET specific surface area 67.4 m²/g, average particle size 35 nm) Carbon black 2 (hereinafter CB2) (The DBP oil absorption 140 cc/100 g, BET specific surface area 43.1m²/g, average particle size 50 nm) Carbon fiber by vapor method "VGCF" (registered trademark) (manufactured by Showa Denko K. K., an electrically conductive material having a linear portion, the average fiber diameter 150 nm, average fiber length 9 µm, specific surface area 13 m²/g).
   C: Solvent
      Purified water
   D: Surfactant
      Polyethylene glycol mono-p-isooctyl phenyl ether "TRITON X-100" (registered trademark) (manufactured by Sigma-Aldrich Corporation)
   E: Water-repellent resin
      PTFE dispersion "POLYFLON D-210C" (registered trademark) (manufactured by Daikin Industries, Ltd.) FEP dispersion "POLYFLON ND-110" (registered trademark) (manufactured by Daikin Industries, Ltd.)

### <Measuring Thickness of Electrically Conductive Porous Substrate, Microporous Layer and Gas Diffusion Electrode>

The thickness of the gas diffusion electrode and the electrically conductive porous substrate was measured, using a digital thickness meter, "Digimicro" produced by Nikon Corporation, by adding a load of 0.15 MPa to the substrate.

For the thickness of the microporous layer, a scanning electron microscopy, S-4800 produced by Hitachi, Ltd. was used to observe the interface of the electrically conductive porous substrate and the microporous layer (the interface herein refers to the portion where the outermost surface of the electrically conductive porous substrate is in contact with the microporous layer, excluding the portion where the microporous layer infiltrates the electrically conductive porous substrate) from the through-plane cross section of the gas diffusion electrode (through-thickness cross section), and measure the distance between the interface and the surface of the microporous layer, which was considered as the thickness of the microporous layer. The measurement was carried out in 10 viewing areas, and the average value was obtained. For preparation of the cross section of the gas diffusion electrode, an ion milling apparatus IM4000 produced by Hitachi High-Tech Solutions Corporation was used. The image magnification of the scanning electron microscopy in the measurement was 1000x or 2000x.

### <Through-thickness Gas Diffusivity of Gas Diffusion Electrode>

Using a gas/water vapor diffusion and permeation measurement apparatus (MVDP-200C) manufactured by Seika Corporation, oxygen gas was passed through one side of the gas diffusion electrode (primary side), while nitrogen gas was passed through the other side (secondary side). The pressure difference between the primary and the secondary sides was controlled near 0 Pa (0±3 Pa). In other words, under conditions where there is hardly gas flow due to the pressure difference, the gas migration phenomenon occurs only by molecular diffusion. The oxygen gas concentration in an equilibrium state was measured with a gas concentration meter in the secondary side. The obtained value (%) was used as an index of the through-thickness gas diffusivity.

### <Planar Gas Diffusivity of Gas Diffusion Electrode>

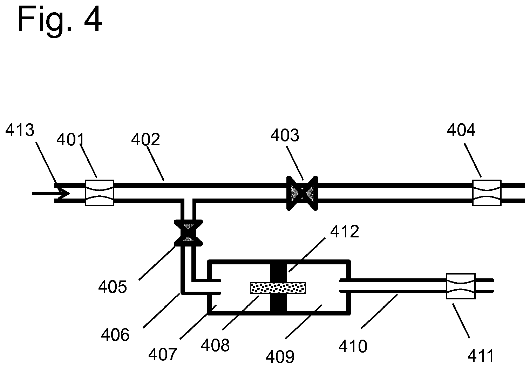

The gas/water vapor diffusion and permeation measurement apparatus (MVDP-200C) produced by Seika Corporation is used. In a pipe arrangement as shown in Fig. 4, only the valve A (403) is opened first while the valve B (405) is closed. Nitrogen gas (413) is flowed to the pipe arrangement primary side A (402), and adjusted so that a given amount of gas (190 cc/min) is flowed into the mass flow controller (401), which puts a gas pressure of 5 kPa with respect to the atmospheric pressure on the pressure controller (404). The gas diffusion electrode sample (408) is placed as shown on the sealing member (412) between the gas chamber A (407) and the gas chamber B (409). Then, the valve A (403) is closed and the valve B (405) is opened, causing the nitrogen gas to flow to the pipe arrangement B (406). The nitrogen gas flowing to the gas chamber A (407) moves to the gas chamber B (409) through the gas diffusion electrode sample (408), then passes the pipe arrangement C (410) and further the gas flow meter (411) and then liberated to the air. The gas flow rate (cc/min) that passes the gas flow meter (411) was measured and this value was used as the planar gas diffusivity.

### <Measurement of Maximal Height Rz of Surface of Microporous Layer>

For the maximal height Rz of the surface of the microporous layer, a laser microscope "VK-X100" manufactured by KEYENCE CORPORATION was used with the objective lens of 20x and without cut-off to measure the surface of the produced microporous layer in the area of 0.25 mm². In order to avoid the distortion of the gas diffusion electrode to be measured, a 25-cm² cube was cut out and put on a smooth glass substrate, and then taped on the four corners to be fixed thereon. The upper and lower limits of the focal distance of the laser are set in a way that an entire range in the height direction of the surface of the microporous layer of the gas diffusion electrode can be measured. This measurement was carried out for 4000 viewing areas. The measurement in these 4000 viewing areas was carried out within the area of 10 cm². The maximal height Rz herein indicates the sum of the highest point (Rp) and the depth of the deepest trough (Rv) among the height data obtained from the measurement of the above measurement area by the laser microscope.

### <Measurement of Maximal Peak Height Rp of Surface of Microporous Layer>

In order to measure the maximal peak height Rp of the microporous layer surface, first of all, an applicator is used to coat the microporous layer paint on a smooth glass substrate to form a coated membrane. The clearance between the applicator and the glass substrate is set so that the thickness after drying of the coated membrane measured by a micrometer with a surface pressure of 0.15 MPa applied will be 40 µm. After the coated membrane was dried at 23°C for 12 hours or more, the laser microscope "VK-X100" manufactured by KEYENCE CORPORATION was used with the objective lens of 20x, the measurement area of 0.25 mm² and without cut-off to measure the maximal peak height Rp. This measurement was carried out for 2000 viewing areas. The measurement in these 2000 viewing areas was carried out within the area of 5 cm². The maximal peak height Rp herein indicates the highest point among the height data obtained from the measurement of the above measurement area by the laser microscope.

### <Measurement of Crack Occupancy of Surface of Microporous Layer>

In order to measure the surface of the microporous layer for its crack occupancy, the surface of the microporous layer of the produced gas diffusion electrode was observed in the area of 25 mm² by a stereo microscope "Leica M205C" (manufactured by Leica Microsystems) with the ocular lens of x10 and the objective lens of x2. The ring light attached to "Leica M205C" was used as the light source to illuminate the surface of the microporous layer vertically with the full illumination and the maximal light intensity.

The observation conditions were: luminance 50% and γ 0.60. Twenty viewing areas were chosen as observation areas from the area of 5 cm². The observation results from the 20 viewing areas were incorporated as images and binarized, using a free image processing software "JTrim." No modification except the binarization was added to the images. The threshold in the binarization was 128. A black portion was judged as a crack while a white portion was judged as a non-crack portion. Thus, the ratio of black pixels to the whole pixels was used as the crack occupancy of the surface of the microporous layer.

### <Measurement of Gloss Level>

In order to measure the gloss level of the microporous layer paint, first of all, an applicator was used to coat the microporous layer paint on a glass substrate to form a coated membrane. The clearance between the applicator and the glass substrate is set so that the thickness after drying of the coated membrane measured by a micrometer with a surface pressure of 0.15 MPa applied will be 40 µm. After the coated membrane was dried at 23°C for 12 hours or more, a mobile specular gloss level meter "Gloss Mobile GM-1" (manufactured by Suga Test Instruments Co., Ltd.) was used to measure the gloss level. The measurement standards followed JIS Z 8741:1997 "Specular glossiness - Method of Measurement". The gloss level meter was installed in a way that the light of the gloss level meter would reflect in parallel to the coating direction by the applicator. Thus, three sites on the surface of the coated membrane were separately measured. The values obtained at the reflection angle of 85° were averaged to determine the gloss level.

### <Measurement of Viscosity of Microporous Layer Paint>

Bohlin rotational rheometer (manufactured by Spectris Co., Ltd.) is used in the viscosity measurement mode. A circular cone plate with a diameter of 40 mm and the inclination of 2° is used and the stress is measured as the number of the rotations of the plate increases. The viscosity value at the shear rate of 17 s⁻¹ was used as the viscosity of the paint.

### (Example 1)

The CB1 as electrically conductive microparticles, D-210C as a water-repellent resin, a surfactant and a solvent were wetted and diffused at a ratio shown in Table 1, using a mixing and agitation apparatus (planetary mixer). The resulting paint was passed through the three-roll mill a single time to carry out the crushing step, and thus a microporous layer paint was obtained. This microporous layer paint was coated on the surface of the carbon paper with a thickness of 100 µm obtained from the step A (1) via a die coating method to obtain a gas diffusion electrode. The composition, production conditions and evaluation results of the microporous layer paint are shown in Table 1.

### (Example 2)

A gas diffusion electrode was obtained in the same manner as in Example 1 except that in the crushing step, the microporous layer paint passed the smallest gap portion of the shear portion in the apparatus four times. Results are shown in Table 1.

### (Comparative Example 1)

A gas diffusion electrode was obtained in the same manner as in Example 1 except that the crushing step was not carried out. As a result, the number of aggregates increased compared to Example 1. The composition, production conditions and evaluation results of the microporous layer paint are shown in Table 1.

### (Example 3)

The CB1 as electrically conductive microparticles, a surfactant and a solvent were wetted and diffused in a mixing and agitation apparatus (planetary mixer) to obtain a paint. The crushing step was omitted. D-210C as a water-repellent resin, a surfactant and a solvent were further added to the resulting paint at the ratio shown in Table 1 for dilution to obtain the microporous layer paint of the final paint composition shown in Table 1. This microporous layer paint was coated on the surface of the carbon paper with a thickness of 100 µm obtained from the step A (1) via a die coating method to obtain a gas diffusion electrode. The composition, production conditions and evaluation results of the microporous layer paint are shown in Table 1. The numbers of viewing areas of Rp and viewing areas of Rz increased compared to Example 1.

### (Comparative Example 2)

A gas diffusion electrode was obtained in the same manner as in Example 3 except that the composition of the dilution materials was changed as shown in Table 1. The composition, production conditions and evaluation results of the microporous layer paint are shown in Table 1. The thickness of the microporous layer decreased in comparison with Example 3. Since the microporous layer paint infiltrated the electrically conductive porous substrate, the planar gas diffusivity decreased.

### (Example 4)

The CB2 as electrically conductive microparticles, ND-110 as a water-repellent resin, a surfactant and a solvent were wetted and diffused at a ratio shown in Table 2, using a mixing and agitation apparatus (planetary mixer). The resulting paint was passed through the media-less mill a single time to carry out the crushing step, and thus a microporous layer paint was obtained. This microporous layer paint was coated on the surface of the carbon paper with a thickness of 100 µm obtained from the step A (1) via a die coating method to obtain a gas diffusion electrode. The composition, production conditions and evaluation results of the microporous layer paint are shown in Table 2.

### (Comparative Example 3)

A gas diffusion electrode was obtained in the same manner as in Example 4 except that the residence time of the paint in the smallest gap portion of the shear portion in the media-less mill used in the crushing step was 6 seconds. The composition, production conditions and evaluation results of the microporous layer paint are shown in Table 2. The thickness of the microporous layer decreased in comparison with Example 4. Since the microporous layer paint infiltrated the electrically conductive porous substrate, the planar gas diffusivity decreased.

### (Example 5)

The CB1 and VGCF as electrically conductive microparticles, ND-110 as a water-repellent resin, a surfactant and a solvent were wetted and diffused at a ratio shown in Table 2, using a mixing and agitation apparatus (planetary mixer), to obtain a paint. The resulting paint was passed through the media-less mill a single time to carry out the crushing step, and thus a microporous layer paint was obtained. This microporous layer paint was coated on the surface of the carbon paper with a thickness of 100 µm obtained from the step A (1) via a die coating method to obtain a gas diffusion electrode. The composition, production conditions and evaluation results of the microporous layer paint are shown in Table 2.

### (Comparative Example 4)

A gas diffusion electrode was obtained in the same manner as in Example 5 except that the smallest gap of the shear portion in the media-less mill used in the crushing step was 600 µm. The composition, production conditions and evaluation results of the microporous layer paint are shown in Table 2. The number of aggregates increased compared to Example 5.

### (Comparative Example 5)

A microporous layer paint was obtained in the same manner as in Example 1. This microporous layer paint was coated on the surface of the carbon paper with a thickness of 200 µm obtained from the step A (2) via a die coating method to obtain a gas diffusion electrode. The composition, production conditions and evaluation results of the microporous layer paint are shown in Table 2. The through-thickness gas diffusivity decreased compared to Example 1.

### (Comparative Example 6)

A microporous layer paint was obtained in the same manner as in Example 1. This microporous layer paint was coated on the surface of the carbon paper with a thickness of 100 µm obtained from the step A (1) via a die coating method to form a microporous layer with a thickness of 120 µm, and thus, a gas diffusion electrode was obtained. The composition, production conditions and evaluation results of the microporous layer paint are shown in Table 2. The through-thickness gas diffusivity decreased compared to Example 1.

### (Example 6)

In this aspect, the microporous layer was composed of a first microporous layer in contact with the electrically conductive porous substrate and a second microporous layer in contact with the first microporous layer and located on the outermost surface of the gas diffusion electrode.

The CB1 as electrically conductive microparticles, D-210C as a water-repellent resin, a surfactant and a solvent were wetted and diffused at a ratio shown in Table 3, using a mixing and agitation apparatus (planetary mixer), to obtain a paint. The resulting paint was passed through the three-roll mill a single time to carry out the crushing step, and thus a first microporous layer paint was obtained. The first microporous layer paint was coated in a thickness of 35 µm on the surface of the carbon paper with a thickness of 100 µm obtained from the step A (1) via a die coating method to obtain a first microporous layer.

The same coating liquid as the first microporous layer paint was used as a second microporous layer paint and coated in a thickness of 5 µm on the surface of the first microporous layer to form a second microporous layer, and thus a gas diffusion electrode was obtained. The composition, production conditions and evaluation results of the microporous layer paint are shown in Table 3.

### (Example 7)

As in Example 6, the first microporous layer with a thickness of 35 µm was formed on the surface of the carbon paper with a thickness of 100 µm obtained from the step A (1).

The CB1 as electrically conductive microparticles, a surfactant and a solvent were wetted and diffused at a ratio shown in Table 3, using a mixing and agitation apparatus (planetary mixer), to obtain a paint. The crushing step was omitted. D-210C as a water-repellent resin, a surfactant and a solvent were further added to this paint at the ratio shown in Table 3 for dilution to obtain a second microporous layer paint of the final paint composition shown in Table 3. The solid ratio after the dilution was the same as in Example 4. The second microporous layer paint was coated in a thickness of 5 µm on the surface of the first microporous layer to obtain a gas diffusion electrode. The composition, production conditions and evaluation results of the microporous layer paint are shown in Table 3.

### (Example 8)

The same first microporous layer paint as in Example 6 was prepared. The first microporous layer was formed on the surface of the carbon paper with a thickness of 100 µm in the same manner as in Example 6 except the thickness of the first microporous layer was 20 µm.

The same second microporous layer paint as in Example 7 was prepared and coated in a thickness of 20 µm on the surface of the first microporous layer to obtain a gas diffusion electrode. The composition, production conditions and evaluation results of the microporous layer paint are shown in Table 3. The crack occupancy increased compared to Example 7.

### (Example 9)

The same first microporous layer paint as in Example 6 was prepared. The first microporous layer was formed on the surface of the carbon paper with a thickness of 100 µm in the same manner as in Example 6 except the thickness of the first microporous layer was 5 µm.

The same second microporous layer paint as in Example 7 was prepared and coated in a thickness of 35 µm on the surface of the first microporous layer to obtain a gas diffusion electrode. The composition, production conditions and evaluation results of the microporous layer paint are shown in Table 3. The crack occupancy increased compared to Example 7.

### (Example 10)

As in Example 6, the first microporous layer with a thickness of 35 µm was formed on the surface of the carbon paper with a thickness of 100 µm obtained from the step A (1).

The CB1 as electrically conductive microparticles, a surfactant and a solvent were wetted and diffused at a ratio shown in Table 3, using a mixing and agitation apparatus (planetary mixer), to obtain a paint. The crushing step was omitted. D-210C as a water-repellent resin, a surfactant and a solvent were further added to this paint at the ratio shown in Table 3 for dilution to obtain a second microporous layer paint of the final paint composition shown in Table 3. The solid ratio after the dilution was the same as in Comparative Example 2. The second microporous layer paint was coated in a thickness of 5 µm on the surface of the first microporous layer to obtain a gas diffusion electrode. The composition, production conditions and evaluation results of the microporous layer paint are shown in Table 3.

### (Example 11)

As in Example 6, the first microporous layer with a thickness of 35 µm was formed on the surface of the carbon paper with a thickness of 100 µm obtained from the step A (1).

The CB2 as electrically conductive microparticles, ND-110 as a water-repellent resin, a surfactant and a solvent were wetted and diffused at a ratio shown in Table 4, using a mixing and agitation apparatus (planetary mixer), to obtain a paint. The resulting paint was passed through the media-less mill a single time to carry out the crushing step, and thus a second microporous layer paint was obtained. The residence time of the paint in the smallest gap portion of the shear portion in the apparatus used in the crushing step was 6 seconds. The second microporous layer paint was coated in a thickness of 5 µm on the surface of the first microporous layer to obtain a gas diffusion electrode. The composition, production conditions and evaluation results of the microporous layer paint are shown in Table 4.

### (Example 12)

A first microporous layer paint was obtained in the same manner as in Example 6 except that the crushing step was not carried out. The first microporous layer paint was coated in a thickness of 35 µm on the surface of the carbon paper with a thickness of 100 µm obtained from the step A (1) via a die coating method to obtain a first microporous layer.

The same second microporous layer paint as in Example 6 was prepared and coated in a thickness of 5 µm on the surface of the first microporous layer to obtain a gas diffusion electrode. The composition, production conditions and evaluation results of the microporous layer paint are shown in Table 4.

### (Example 13)

As in Example 12, the first microporous layer with a thickness of 35 µm was formed on the surface of the carbon paper with a thickness of 100 µm obtained from the step A (1).

The same second microporous layer paint as in Example 7 was prepared and coated in a thickness of 5 µm on the surface of the first microporous layer to obtain a gas diffusion electrode. The composition, production conditions and evaluation results of the microporous layer paint are shown in Table 4.

### (Example 14)

As in Example 12, the first microporous layer with a thickness of 35 µm was formed on the surface of the carbon paper with a thickness of 100 µm obtained from the step A (1).

The same second microporous layer paint as in Example 10 was prepared and coated in a thickness of 5 µm on the surface of the first microporous layer to obtain a gas diffusion electrode. The composition, production conditions and evaluation results of the microporous layer paint are shown in Table 4.

### (Example 15)

As in Example 12, the first microporous layer with a thickness of 35 µm was formed on the surface of the carbon paper with a thickness of 100 µm obtained from the step A (1).

The same second microporous layer paint as in Example 11 was prepared and coated in a thickness of 5 µm on the surface of the first microporous layer to obtain a gas diffusion electrode. The composition, production conditions and evaluation results of the microporous layer paint are shown in Table 4.

**[Table 1]**

| | | | Example 1 | Example 2 | Comparative Example 1 | Example 3 | Comparative Example 2 |
|---|---|---|---|---|---|---|---|
| | Materials introduced in wetting and diffusing step | | | | | | |
| | Solvent [wt%] | | 65 | 65 | 65 | 70 | 70 |
| | Electrically conductive microparticle | CB1 | 10 | 10 | 10 | 20 | 20 |
| | [wt%] | CB2 | | | | | |
| | | VGCF | | | | | |
| | Water-repellent resin | D-210C | 5 | 5 | 5 | | |
| | [wt%] | ND-110 | | | | | |
| | Surfactant [wt%] | | 20 | 20 | 20 | 10 | 10 |
| | Crushing step process conditions | | | | | | |
| | Viscosity after wetting and diffusing step [Pa·s] | | 11 | 11 | 11 | 39 | 39 |
| | Apparatus used in crushing step | | Three-roll | Three-roll | | | |
| | Smallest gap [µm] | | 20 | 20 | | | |
| | Residence time [sec] | | 0.006 | 0.006 | | | |
| | Number of passages [times] | | 1 | 4 | | | |
| Microporous layer | Dilution materials after crushing step | | | | | | |
| | Solvent [wt%] | | | | | 10 | 60 |
| | Water-repellent resin | D-210C | | | | 20 | 10 |
| | [wt%] | ND-110 | | | | | |
| | Surfactant [wt%] | | | | | 70 | 30 |
| | Final paint composition (crushing step, after dilution) | | | | | | |
| | Solvent [wt%] | | 65 | 65 | 65 | 55 | 65 |
| | Electrically conductive microparticle | CB1 | 10 | 10 | 10 | 15 | 10 |
| | [wt%] | CB2 | | | | | |
| | | VGCF | | | | | |
| | Water-repellent resin | D-210C | 5 | 5 | 5 | 5 | 5 |
| | [wt%] | ND-110 | | | | | |
| | Surfactant [wt%] | | 20 | 20 | 20 | 25 | 20 |
| | Final paint properties (crushing step, after dilution) | | | | | | |
| | Number of viewing areas of Rp | | 16 | 1 | 182 | 7 | 9 |
| | Gloss level [%] | | 16 | 18 | 15 | 53 | 65 |
| | Viscosity [Pa·s] | | 9 | 6.2 | 11.1 | 5.6 | 0.5 |
| Gas diffusion electrode properties | | | | | | | |
| Gas diffusion electrode thickness [µm] | | | 140 | 180 | 140 | 120 | 105 |
| Microporous layer thickness [µm] | | | 40 | 80 | 40 | 20 | 5 |
| Number of viewing areas of Rz | | | 3 | 0 | 12 | 2 | 0 |
| Gas diffusivity (through-thickness) [%] | | | 33.2 | 30.8 | 33.2 | 33.3 | 33.7 |
| Gas diffusivity (planar) [cc/min] | | | 24.1 | 65.2 | 24.1 | 13.5 | 8.8 |
| Value obtained by formula (0.7 e^{0.025x}) | | | 23.2 | 63.0 | 23.2 | 14.1 | 9.7 |
| Crack occupancy [%] | | | 0 | 0 | 0 | 0 | 0.005 |

**[Table 2]**

| | | | Example 4 | Comparative Example 3 | Example 5 | Comparative Example 4 | Comparative Example 5 | Comparative Example 6 |
|---|---|---|---|---|---|---|---|---|
| | Materials introduced in wetting and diffusing step | | | | | | | |
| | Solvent [wt%] | | 70 | 70 | 65 | 65 | 65 | 65 |
| | Electrically conductive microparticle | CB1 | | | 5 | 5 | 10 | 10 |
| | [wt%] | CB2 | 15 | 15 | | | | |
| | | VGCF | | | 5 | 5 | | |
| | Water-repelle nt resin | D-210 C | | | | | 5 | 5 |
| | [wt%] | ND-11 0 | 7.5 | 7.5 | 5 | 5 | | |
| | Surfactant [wt%] | | 7.5 | 7.5 | 20 | 20 | 20 | 20 |
| | Crushing step process conditions | | | | | | | |
| | Viscosity after wetting and diffusing step [Pa·s] | | 10 | 10 | 15 | 15 | 11 | 11 |
| | Apparatus used in crushing step | | Media-le ss mill | Media-less mill | Media-le ss mill | Media-less mill | Three-roll | Three-roll |
| | Smallest gap [µm] | | 100 | 100 | 300 | 600 | 20 | 20 |
| | Residence time [sec] | | 1 | 6 | 2 | 2 | 0.006 | 0.006 |
| | Number of passages [times] | | 1 | 1 | 1 | 1 | 1 | 1 |
| Microporous layer | Dilution materials after crushing step | | | | | | | |
| | Solvent [wt%] | | | | | | | |
| | Water-repelle nt resin | D-210 C | | | | | | |
| | [wt%] | ND-11 0 | | | | | | |
| | Surfactant [wt%] | | | | | | | |
| | Final paint composition (crushing step, after dilution) | | | | | | | |
| | Solvent [wt%] | | 62.5 | 62.5 | 65 | 65 | 65 | 65 |
| | Electrically conductive microparticle | CB1 | | | | | 10 | 10 |
| | [wt%] | CB2 | 15 | 15 | | | | |
| | | VGCF | | | 10 | 10 | | |
| | Water-repelle nt resin | D-210 C | | | | | 5 | 5 |
| | [wt%] | ND-11 0 | 7.5 | 7.5 | 5 | 5 | | |
| | Surfactant [wt%] | | 15 | 15 | 20 | 20 | 20 | 20 |
| | Final paint | | | properties (crushing step, after dilution) | | | | |
| | Number of viewing areas of Rp | | 20 | 1 | 24 | 38 | 16 | 16 |
| | Gloss level [%] | | 18 | 38 | 26 | 27 | 16 | 16 |
| | Viscosity [Pa·s] | | 5.5 | 1.7 | 7.8 | 10.2 | 9 | 9 |
| Gas diffusion electrode properties | | | | | | | | |
| Gas diffusion electrode thickness [µm] | | | 140 | 105 | 140 | 140 | 240 | 220 |
| Microporous layer thickness [µm] | | | 40 | 5 | 40 | 40 | 40 | 120 |
| Number of viewing areas of Rz | | | 3 | 1 | 2 | 9 | 3 | 3 |
| Gas diffusivity (through-thickness) [%] | | | 33.8 | 34.0 | 33.4 | 33.4 | 28.5 | 29.3 |
| Gas diffusivity (planar) [cc/min] | | | 25.3 | 9.1 | 30.1 | 25.9 | - | - |
| Value obtained by formula (0.7 e^{0.025x}) | | | 23.2 | 9.7 | 23.2 | 23.2 | 282.4 | |
| Crack occupancy [%] | | | 0 | 0.1 | 0 | 0 | 0 | 0.003 |

**[Table 3-1]**

| | | | Example 6 | Example 7 | Example 8 | Example 9 | Example 10 |
|---|---|---|---|---|---|---|---|
| | Materials introduced in wetting and diffusing step | | | | | | |
| | Solvent [wt%] | | 65 | 65 | 65 | 65 | 65 |
| | Electrically conductive microparticle | CB1 | 10 | 10 | 10 | 10 | 10 |
| | [wt%] | CB2 | | | | | |
| | | VGCF | | | | | |
| | Water-repellent resin | D-210C | 5 | 5 | 5 | 5 | 5 |
| | [wt%] | ND-110 | | | | | |
| | Surfactant [wt%] | | 20 | 20 | 20 | 20 | 20 |
| | Crushing step process conditions | | | | | | |
| | Viscosity after wetting and diffusing step [Pa·s] | | 11 | 11 | 11 | 11 | 11 |
| | Apparatus used in crushing step | | Three-roll | Three-roll | Three-roll | Three-roll | Three-roll |
| | Smallest gap [µm] | | 20 | 20 | 20 | 20 | 20 |
| | Residence time [sec] | | 0.006 | 0.006 | 0.006 | 0.006 | 0.006 |
| | Number of passages [Times] | | 1 | 1 | 1 | 1 | 1 |
| First microporous layer | Dilution materials after crushing step | | | | | | |
| | Solvent [wt%] | | | | | | |
| | Water-repellent resin | D-210C | | | | | |
| | [wt%] | ND-110 | | | | | |
| | Surfactant [wt%] | | | | | | |
| | Final paint composition (crushing step, after dilution) | | | | | | |
| | Solvent [wt%] | | 65 | 65 | 65 | 65 | 65 |
| | Electrically conductive microparticle | CB1 | 10 | 10 | 10 | 10 | 10 |
| | [wt%] | CB2 | | | | | |
| | | VGCF | | | | | |
| | Water-repellent resin | D-210C | 5 | 5 | 5 | 5 | 5 |
| | [wt%] | ND-110 | | | | | |
| | Surfactant [wt%] | | 20 | 20 | 20 | 20 | 20 |
| | Final paint properties (crushing step, after dilution) | | | | | | |
| | Number of viewing areas of Rp | | 16 | 16 | 16 | 16 | 16 |
| | Gloss level [%] | | 16 | 16 | 16 | 16 | 16 |
| | Viscosity [Pa·s] | | 9 | 9 | 9 | 9 | 9 |

**[Table 3-2]**

| | | | Example 6 | Example 7 | Example 8 | Example 9 | Example 10 |
|---|---|---|---|---|---|---|---|
| | Materials introduced in wetting and diffusing step | | | | | | |
| | Solvent [wt%] | | 65 | 70 | 70 | 70 | 70 |
| | Electrically conductive microparticle | CB1 | 10 | 20 | 20 | 20 | 20 |
| | [wt%] | CB2 | | | | | |
| | | VGCF | | | | | |
| | Water-repellent resin | D-210C | 5 | | | | |
| | [wt%] | ND-110 | | | | | |
| Second microporous layer | Surfactant [wt%] | | 20 | 10 | 10 | 10 | 10 |
| | Crushing step process conditions | | | | | | |
| | Viscosity after wetting and diffusing step [Pa·s] | | 11 | 39 | 39 | 39 | 39 |
| | Apparatus used in crushing step | | Three-roll | | | | |
| | Smallest gap [µm] | | 20 | | | | |
| | Residence time [sec] | | 0.006 | | | | |
| | Number of passages [times] | | 1 | | | | |
| | Dilution materials after crushing step | | | | | | |
| | Solvent [wt%] | | | 10 | 10 | 10 | 60 |
| | Water-repellent resin | D-210C | | 20 | 20 | 20 | 10 |
| | [wt%] | ND-110 | | | | | |
| | Surfactant [wt%] | | | 70 | 70 | 70 | 30 |
| | Final paint com osition (crushing step, after dilution) | | | | | | |
| | Solvent [wt%] | | 65 | 55 | 55 | 55 | 65 |
| | Electrically conductive microparticle | CB1 | 10 | 15 | 15 | 15 | 10 |
| | [wt%] | CB2 | | | | | |
| | | VGCF | | | | | |
| | Water-repellent resin | D-210C | 5 | 5 | 5 | 5 | 5 |
| | [wt%] | ND-110 | | | | | |
| | Surfactant [wt%] | | 20 | 25 | 25 | 25 | 20 |
| | Gas diffusion electrode properties | | | | | | |
| | Gas diffusion electrode thickness [µm] | | 140 | 140 | 140 | 140 | 140 |
| | Microporous layer thickness [µm] | | 40 | 40 | 40 | 40 | 40 |
| | First microporous layer thickness [µm] | | 35 | 35 | 20 | 5 | 35 |
| | Second microporous layer thickness [µm] | | 5 | 5 | 20 | 35 | 5 |
| | Number of viewing areas of Rz | | 3 | 0 | 1 | 1 | 0 |
| | Gas diffusivity (through-thickness) [%] | | 33.2 | 32.9 | 32.8 | 32.6 | 32.5 |
| | Gas diffusivity (planar) [cc/min] | | 24.2 | 24.2 | 24.0 | 23.8 | 23.9 |
| | Value obtained by formula (0.7 e0.025x) | | 23.2 | 23.2 | 23.2 | 23.2 | 23.2 |
| | Crack occupancy [%] | | 0 | 0 | 0.1 | 0.4 | 0.005 |

**[Table 4-1]**

| | | | Example 11 | Example 12 | Example 13 | Example 14 | Example 15 |
|---|---|---|---|---|---|---|---|
| | Materials introduced in wetting and diffusing step | | | | | | |
| | Solvent [wt%] | | 65 | 65 | 65 | 65 | 65 |
| | Electrically conductive microparticle | CB1 | 10 | 10 | 10 | 10 | 10 |
| | [wt%] | CB2 | | | | | |
| | | VGCF | | | | | |
| | Water-repellent resin | D-210C | 5 | 5 | 5 | 5 | 5 |
| | [wt%] | ND-110 | | | | | |
| | Surfactant [wt%] | | 20 | 20 | 20 | 20 | 20 |
| | Crushing step process conditions | | | | | | |
| | Viscosity after wetting and diffusing step [Pa·s] | | 11 | 11 | 11 | 11 | 11 |
| | Apparatus used in crushing step | | Three-roll | | | | |
| First microporous layer | Smallest gap [µm] | | 20 | | | | |
| | Residence time [sec] | | 0.006 | | | | |
| | Number of passages [times] | | 1 | | | | |
| | Dilution materials after crushing step | | | | | | |
| | Solvent [wt%] | | | | | | |
| | Water-repellent resin | D-210C | | | | | |
| | [wt%] | ND-110 | | | | | |
| | Surfactant [wt%] | | | | | | |
| | Final paint composition (crushing step, after dilution) | | | | | | |
| | Solvent [wt%] | | 65 | 65 | 65 | 65 | 65 |
| | Electrically conductive microparticle | CB1 | 10 | 10 | 10 | 10 | 10 |
| | [wt%] | CB2 | | | | | |
| | | VGCF | | | | | |
| | Water-repellent resin | D-210C | 5 | 5 | 5 | 5 | 5 |
| | [wt%] | ND-110 | | | | | |
| | Surfactant [wt%] | | 20 | 20 | 20 | 20 | 20 |
| | Final paint properties (crushing step, after dilution) | | | | | | |
| | Number of viewing areas of Rp | | 16 | 182 | 182 | 182 | 182 |
| | Gloss level [%] | | 16 | 15 | 15 | 15 | 15 |
| | Viscosity [Pa·s] | | 9 | 11.1 | 11.1 | 11.1 | 11.1 |

**[Table 4-2]**

| | | | Example 11 | Example 12 | Example 13 | Example 14 | Example 15 |
|---|---|---|---|---|---|---|---|
| | Materials introduced in wetting and diffusing step ) | | | | | | |
| | Solvent [wt%] | | 70 | 65 | 70 | 70 | 70 |
| | Electrically conductive microparticle | CB1 | | 10 | 20 | 20 | |
| | [wt%] | CB2 | 15 | | | | 15 |
| | | VGCF | | | | | |
| | Water-repellent resin | D-210C | | 5 | | | |
| | [wt%] | ND-110 | 7.5 | | | | 7.5 |
| | Surfactant [wt%] | | 7.5 | 20 | 10 | 10 | 7.5 |
| | Crushing step process conditions | | | | | | |
| | Viscosity after wetting and diffusing step [Pa·s] | | 10 | 11 | 39 | 39 | 10 |
| | Apparatus used in crushing step | | Media-less mill | Three-roll | | | Media-less mill |
| Second microporous layer | Smallest gap [µm] | | 100 | 20 | | | 100 |
| | Residence time [sec] | | 6 | 0.006 | | | 6 |
| | Number of passages [times] | | 1 | 1 | | | 1 |
| | Dilution materials after crushing step | | | | | | |
| | Solvent [wt%] | | | | 10 | 60 | |
| | Water-repellent resin | D-210C | | | 20 | 10 | |
| | [wt%] | ND-110 | | | | | |
| | Surfactant [wt%] | | | | 70 | 30 | |
| | Final paint composition (crushing step, after dilution) | | | | | | |
| | Solvent [wt%] | | 62.5 | 65 | 55 | 65 | 62.5 |
| | Electrically conductive microparticle | CB1 | | 10 | 15 | 10 | |
| | [wt%] | CB2 | 15 | | | | 15 |
| | | VGCF | | | | | |
| | Water-repellent resin | D-210C | | 5 | 5 | 5 | |
| | [wt%] | ND-110 | 7.5 | | | | 7.5 |
| | Surfactant [wt%] | | 15 | 20 | 25 | 20 | 15 |
| Gas diffusion electrode properties | | | | | | | |
| Gas diffusion electrode thickness [µm] | | | 140 | 140 | 140 | 140 | 140 |
| Microporous layer thickness [µm] | | | 40 | 40 | 40 | 40 | 40 |
| First microporous layer thickness [µm] | | | 35 | 35 | 35 | 35 | 35 |
| Second microporous layer thickness [µm] | | | 5 | 5 | 5 | 5 | 5 |
| Number of viewing areas of Rz | | | 0 | 3 | 4 | 3 | 3 |
| Gas diffusivity (through-thickness) [%] | | | 32.4 | 32.5 | 32.8 | 32.0 | 32.8 |
| Gas diffusivity (planar) [cc/min] | | | 23.5 | 23.6 | 23.5 | 24.0 | 23.9 |
| Value obtained by formula (0.7 e^{0.025x}) | | | 23.2 | 23.2 | 23.2 | 23.2 | 23.2 |
| Crack occupancy [%] | | | 0.01 | 0 | 0 | 0.002 | 0.005 |

In tables, the "smallest gap" means that the smallest gap in the shear portion in the apparatus used in the crushing step.

In tables, the "residence time" means the residence time of the paint in the smallest gap portion of the shear portion in the apparatus used in the crushing step.

In tables, the "number of passages" means that the number of times that the paint passes the smallest gap portion of the shear portion in the apparatus used in the crushing step.

In tables, the "number of viewing areas of Rp" means the number of viewing areas having a maximal peak height Rp of not less than 10 µm when the surface of the microporous layer is observed in the area of 0.25 mm² for 2000 viewing areas.

In tables, the "number of viewing areas of Rz" means the number of viewing areas having a maximal height Rz of not less than 50 µm when the surface of the microporous layer is observed in the area of 0.25 mm² for 4000 viewing areas.

### DESCRIPTION OF SYMBOLS

1 Crack
201 Paint
202 Shear portion
203 Roll rotation direction
204 Smallest gap
205 Roll
301 Front view of the apparatus
302 Side view of the apparatus
303 Roll rotation direction
304 Paint
305 Shear portion
306 Rotor
307 Stator
401 Mass flow controller
402 Pipe arrangement A
403 Valve 1
404 Pressure controller
405 Valve 2
406 Pipe arrangement B
407 Gas chamber A
408 Gas diffusion electrode sample
409 Gas chamber B
410 Pipe arrangement C
411 Gas flow meter
412 Sealing member
413 Nitrogen gas

## Claims

1. A gas diffusion electrode, comprising a microporous layer on at least one side of an electrically conductive porous substrate, wherein said gas diffusion electrode has a thickness of 30 µm to 180 µm,
said microporous layer has a thickness of 10 µm to 100 µm, and
when the surface of said microporous layer is observed in the area of 0.25 mm² for 4000 viewing areas, the number of the viewing areas having a maximal height Rz of not less than 50 µm is, among the 4000 viewing areas, 0 viewing areas to 5 viewing areas.

2. The gas diffusion electrode according to claim 1, wherein said microporous layer is composed of a first microporous layer in contact with said electrically conductive porous substrate and a second microporous layer which is in contact with said first microporous layer and located on the outermost surface of said gas diffusion electrode.

3. The gas diffusion electrode according to claim 2, wherein said first microporous layer has a thickness of not less than 9.9 µm and less than 100 µm, and said second microporous layer has a thickness of not less than 0.1 µm and less than 10 µm.

4. The gas diffusion electrode according to any one of claims 1 to 3, wherein the through-thickness gas diffusivity is not less than 30%.

5. The gas diffusion electrode according to any one of claims 1 to 4, wherein the planar gas diffusivity is not less than 0.7 e^{0.025x} (cc/min) with the x (µm) being the thickness of the gas diffusion electrode and the e being Napier's constant.

6. The gas diffusion electrode according to any one of claims 1 to 5, wherein said microporous layer contains an electrically conductive microparticle and a water-repellent resin.

7. The gas diffusion electrode according to claim 6, wherein said electrically conductive microparticle comprises an electrically conductive material having a linear portion.

8. The gas diffusion electrode according to any one of claims 1 to 7, wherein the crack occupancy of the surface of said microporous layer is 0% to 0.072%.

9. A microporous layer paint comprising an electrically conductive microparticle and a solvent, wherein when said microporous layer paint is coated on a glass substrate to form a coated membrane, and the surface of the coated membrane is observed in the area of 0.25 mm² for 2000 viewing areas, the number of the viewing areas having a maximal peak height Rp of not less than 10 µm is, among the 2000 viewing areas, 0 viewing areas to 25 viewing areas, and the gloss level is 1% to 30%.

10. The microporous layer paint according to claim 9, wherein the viscosity is 2 Pa·s to 15 Pa·s.

11. A method of producing the microporous layer paint recited in claim 9 or 10, comprising a wetting and diffusing step of wetting and diffusing electrically conductive microparticles with a solvent, and a crushing step of crushing aggregates in the paint resulting from said wetting and diffusing step.

12. The method of producing the microporous layer paint according to claim 11, wherein the viscosity of the paint after said wetting and diffusing step and before said crushing step is 5 Pa·s to 300 Pa·s.

13. The method of producing the microporous layer paint according to claim 11 or 12, wherein the smallest gap of a shear portion of an apparatus used for crushing in said crushing step is 10 µm to 500 µm.

14. The method of producing the microporous layer paint according to any one of claims 11 to 13, wherein the residence time of the paint in the smallest gap of the shear portion of the apparatus used for crushing in said crushing step is more than 0 seconds and not more than 5 seconds.

15. The method of producing the microporous layer paint according to any one of claims 11 to 14, wherein the apparatus used for crushing in said crushing step has a single passage.
